# EUROPEAN PATENT APPLICATION

(11) **EP 3 786 849 A1**
(43) Date of publication of application: **03.03.2021**
(21) Application number: 20020392.5
(22) Date of filing: 28.08.2020
(51) Int. Cl.: G06K 19/07, G06K 19/077

(54) **SMART CARD AND CONTROL METHOD THEREOF**

(30) Priority: 02.09.2019 TW 108131571; 12.05.2020 TW 109115756
(71) Applicant: Elan Microelectronics Corporation, Hsinchu 30076 (TW)
(72) Inventor: Tsai, Hsiao-Hua, Zhubei City, Hsinchu County 30268 (TW); Wang, Ming-Ho, Hsinchu City 300 (TW); Liu, Ta-Huang, Hsinchu City 300 (TW)
(74) Representative: Lang, Christian

(57) **Abstract**

A smart card includes a microprocessor, a biometric sensor, a power supply decision unit, and a power detection unit. When the power source provides electric power to the smart card, the microprocessor of the smart card operates at a lower operating frequency initially. After determining by the power supply detecting unit and the power supply decision unit, it is determined whether a power source provides a higher current or voltage. The microprocessor further determines whether to adjust the operating frequency according to the determination. If so, the operating frequency is further increased to speed up the processing and thereby enhance the user experience.

## Description

### CROSS-REFERENCE TO RELATED APPLICATIONS

This application is based upon and claims priority under 35 U.S.C. 119 from Taiwan Patent Application No. 108131571 filed on September 2, 2019, which is hereby specifically incorporated herein by this reference thereto.

This application is based upon and claims priority under 35 U.S.C. 119 from Taiwan Patent Application No. 109115756 filed on May 12, 2020, which is hereby specifically incorporated herein by this reference thereto.

### BACKGROUND OF THE INVENTION

### 1. Field of the Invention

The present invention relates to a smart card, especially to a smart card that flexibly adjusts the operating frequency.

### 2. Description of the Prior Arts

People's daily lives are filled with the use of many cards. The traditional cards are only used as an information recording interface, such as the name of the card user, the period of use, etc. With the advancement of technology, the cards are no longer the traditional paper cards, and electronic recording media such as magnetic stripes, barcodes, and chips have been added. This allows the cards to carry more information and reduce the chance of being forged, thereby increasing the card's usage probability. However, with the popularization of card use, the phenomenon of stealing and using other people's cards gradually increases. People also inevitably lose cards inadvertently. Therefore, the verification function of the card itself is also important. In the prior art, the biometric sensor has been integrated on the conventional smart card to provide the user with the identity verification when using the conventional smart card.

When using the biometric sensor, it is necessary to supply power to the conventional smart card to execute the processing program. In the prior art, the way to supply the power comprises contact power supply (e.g. when the conventional smart card connecting to the card reader), battery power supply inside the conventional smart card, or contactless inductive power supply (e.g. when the conventional smart card proceeding contactless sensing). The current obtained by each way is very different. Taking contact power supply and contactless inductive power supply as examples, contact power supply provides a current of not less than 7mA, but supply by proximity induction only provides a current of about 4mA. The amount of current affects the operating frequency of the processor of the conventional smart card. The higher the current, the higher the frequency of operation is used, but the lower the current, the lower the frequency of operation is used. Due to the type of the power source may be the contactless inductive power supply (low current), so the conventional smart card usually operates at a lower operating frequency to avoid that the preset operating frequency cannot be used for operation when the power source provides low current. As a result, it is accompanied by corresponding shortcomings. The conventional smart card still operates at a lower operating frequency even if the conventional smart card receives a higher current from the power source. If the operating frequency is low, the processing speed is slow accordingly. Therefore, the user always feels the slower processing speed, which affects the user experience.

To overcome the shortcomings, the present invention provides a smart card and a control method thereof to mitigate or to obviate the aforementioned problems.

### SUMMARY OF THE INVENTION

To overcome the objective, the present invention enables the smart card to adjust the operating frequency of the microprocessor to enhance the user experience.

The present invention provides a smart card comprising a microprocessor, a biometric senor, a power supply decision unit and a power supply detection unit. The biometric sensor, power supply decision unit and the power supply detection unit electrically connect to the microprocessor. The microprocessor operates at a first operating frequency when the microprocessor receives an electric power from a power source. The power supply detection unit detects a type of the power source providing the electric power to the microprocessor. The power supply detection unit transmits a detection result to the power supply decision unit, which is then used by the microprocessor to determine whether to change the first operating frequency.

In another aspect, the present invention provides a control method of a smart card, which comprises a microprocessor and a biometric sensor, comprises steps of: operating the microprocessor at a first operating frequency, determining which type of a power source provides an electric power to the microprocessor; and determining whether the microprocessor changes the first operating frequency based on the determination in the previous step.

The present invention detects the type of the power source to determine whether to adjust the operating frequency. When the microprocessor receives larger power supply, the operating frequency of the microprocessor is increased accordingly to enhance the operating speed. Therefore, the user gets a better user experience under the premise of the microprocessor.

Other objectives, advantages and novel features of the invention will become more apparent from the following detailed description when taken in conjunction with the accompanying drawings.

### BRIEF DESCRIPTION OF THE DRAWINGS

Fig. 1 is a block diagram of a first embodiment of a smart card in accordance with the present invention;
Fig. 2 is a block diagram of a second embodiment of a smart card in accordance with the present invention;
Fig. 3 is a circuit diagram of a power supply decision unit of the smart card in accordance with the present invention;
Fig. 4 is a block diagram of a third embodiment of a smart card in accordance with the present invention;
Fig. 5 is a partial circuit diagram of a power supply detection unit of the smart card in accordance with the present invention;
Fig. 6 is a block diagram of a fourth embodiment of a smart card in accordance with the present invention;
Fig. 7 is a block diagram of a fifth embodiment of a smart card in accordance with the present invention;

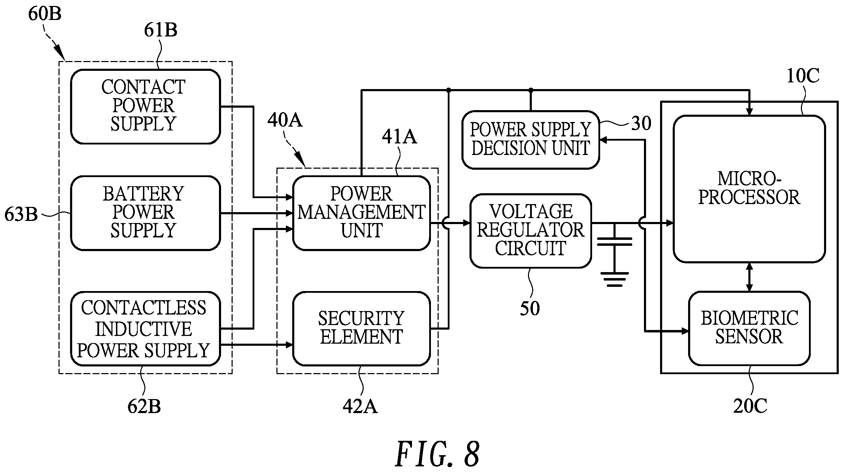

Fig. 8 is a block diagram of a sixth embodiment of a smart card in accordance with the present invention;
Fig. 9 is a block diagram of a seventh embodiment of a smart card in accordance with the present invention;
Fig. 10 is an illustrative view of an encapsulation structure of partial components of the smart card in accordance with the present invention;
Fig. 11 is an illustrative view of another encapsulation structure of partial components of the smart card in accordance with the present invention;
Fig. 12 is a perspective view of a smart card in accordance with the present invention;
Fig. 13 is a block diagram of a eighth embodiment of a smart card in accordance with the present invention;
Fig. 14 is a flow chart of a first embodiment of a control method of the smart card in accordance with the present invention;
Fig. 15A is a flow chart of a second embodiment of a control method of the smart card in accordance with the present invention;
Fig. 15B is a flow chart of a third embodiment of a control method of the smart card in accordance with the present invention;
Fig. 15C is a flow chart of a fourth embodiment of a control method of the smart card in accordance with the present invention; and
Fig. 15D is a flow chart of a fifth embodiment of a control method of the smart card in accordance with the present invention.

### DETAILED DESCRIPTION OF THE EMBODIMENTS

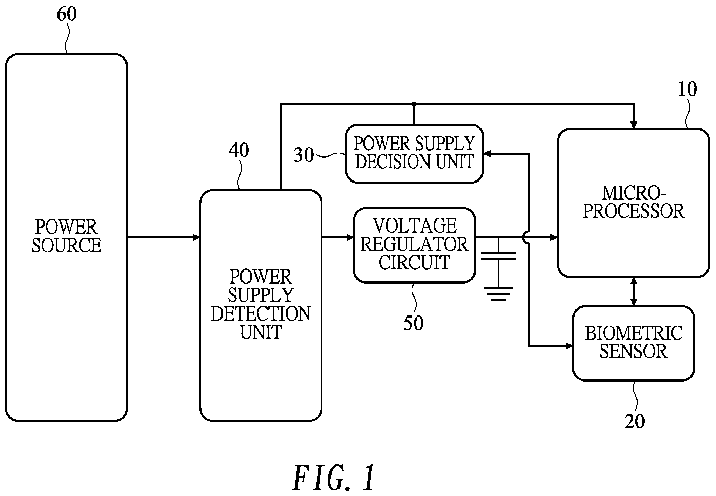

With reference to Fig. 1, a smart card in accordance with the present invention comprises a microprocessor 10, a biometric sensor 20, a power supply decision unit 30, a power supply detection unit 40 and a voltage regulator circuit 50.

The microprocessor 10 electrically connects to the biometric sensor 20, the power supply decision unit 30 and the voltage regulator circuit 50. The power supply detection unit 40 serially connects to the microprocessor 10 through the voltage regulator circuit 50, and transmits a detecting signal of the type of the power source to the power supply decision unit 30 and the microprocessor 10.

The biometric sensor 20 is used to obtain the biometric information of the user so that the microprocessor 10 could use the biometric information to further process or determine the identity of the user. The biometric sensor 20 may be a fingerprint sensor, but is not limited thereto.

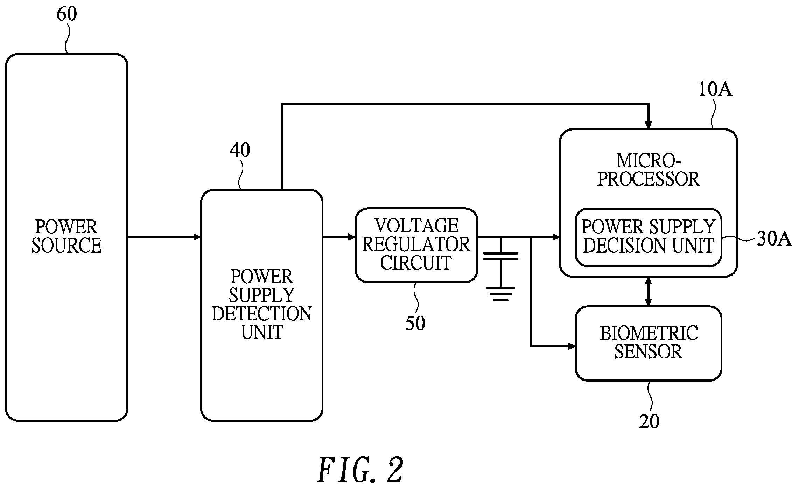

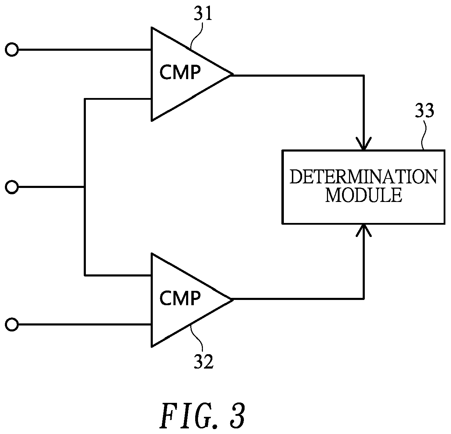

The disposition of the power supply decision unit 30 may be different. In one embodiment as shown in Fig. 1, the power supply decision unit 30 is independent of the microprocessor 10 and is electrically connected to the microprocessor 10. In another embodiment as shown in Fig. 2, the power supply decision unit 30A and the microprocessor 10A are integrated into a circuit architecture. The power supply decision unit 30 may comprise a circuit as shown in Fig. 3, which includes a first comparator 31 and a second comparator 32. The current or voltage detected by the power supply detection unit 40 is compared with a first reference value REF1 stored in the first comparator 31 and a second reference value REF2 stored in the second comparator 32 to retrieve a comparation result. The comparation result is output to a determination module 33 to determine whether an operating frequency of the microprocessor 10 needs to be adjusted. Alternatively, the power supply decision unit 30 may not have the determination module 33, and the comparation result is output directly to the microprocessor 10 to determine whether the operating frequency of the microprocessor 10 needs to be adjusted.

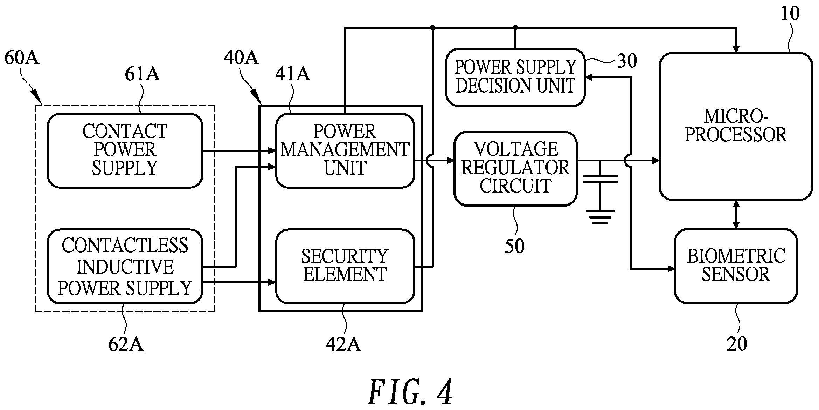

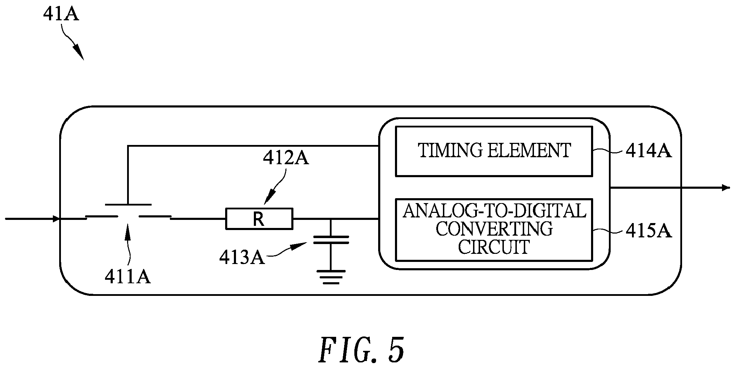

With reference to Fig. 4, in one embodiment, the power supply detection unit 40A comprises a power management unit 41A and a security element (SE) 42A. The confidential information of the smart card is stored in the security element 42A. In one embodiment, the security element 42A and the power management unit 41A are integrated into a circuit architecture. The power management unit 41A may comprise a circuit as shown in Fig. 5, but is not limited thereto. The power management unit 41A may comprise a switching element 411A, a resistor element 412A, a capacitive element 413A, a timing element 414A and an analog-digital converting circuit 415A. The timing element 414A turns on and off of the switching element 411A, so that the current input from the power source charges the capacitive element 413A. By detecting the voltage to determine the variation of the charging time or of the frequency at predetermined time, or detecting the voltage via the analog-digital converting circuit at a predetermined time, the corresponding type of the power source is found. The circuit as shown in Fig. 5 may also be disposed in the microprocessor 10.

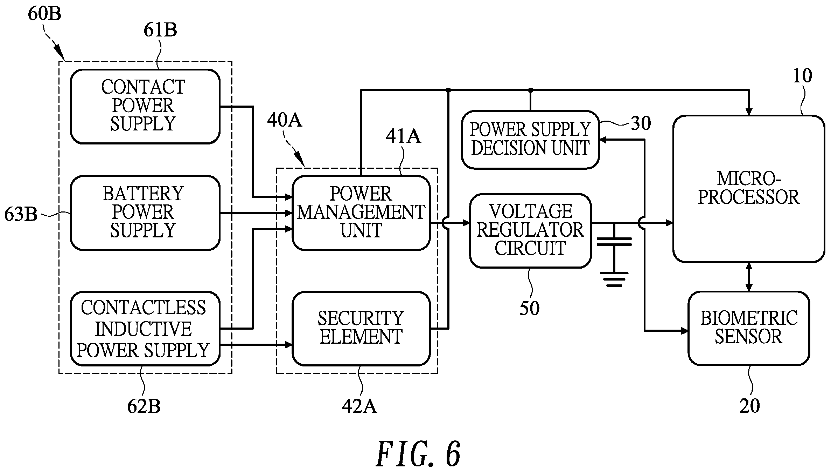

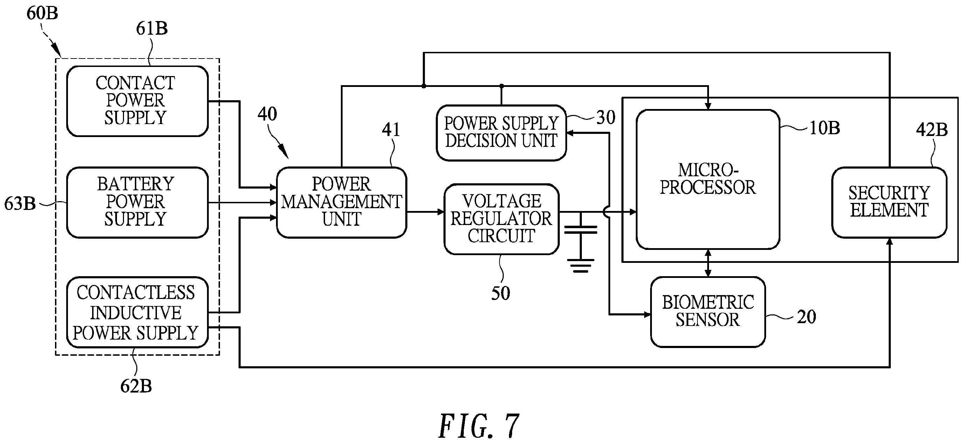

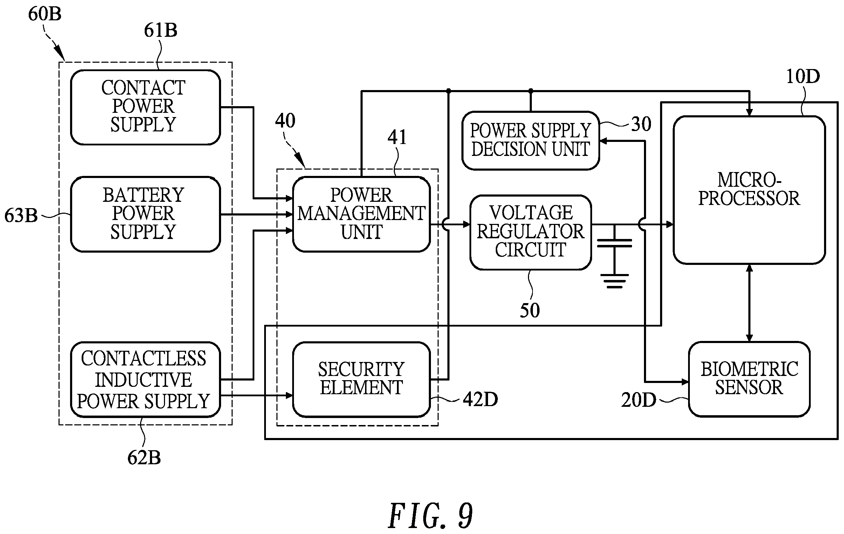

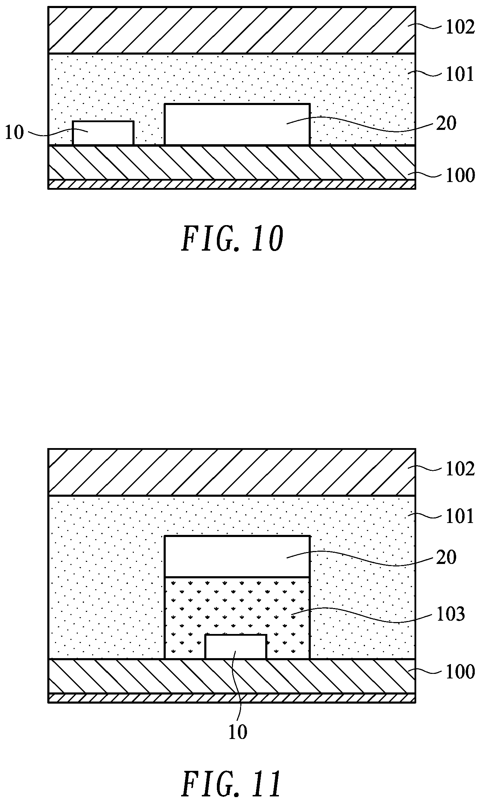

Besides, the circuit architecture of the power supply detection unit 40, the microprocessor 10 and the biometric sensor 20 may have different integration architecture. In one embodiment as shown in Fig. 6, the microprocessor 10, the security element 42A and the biometric sensor 20 are disposed respectively in the independent circuit architectures. In another embodiment as shown in Fig. 7, the microprocessor 10B and the security element 42B are integrated in a circuit architecture. In another embodiment as shown in 8, the microprocessor 10C and the biometric sensor 20C are integrated in a circuit architecture. In another embodiment as shown in Fig. 9, the microprocessor 10D, the biometric sensor 20D and the security element 42D are integrated in a circuit architecture. The aforementioned elements may also have different encapsulation structures. The microprocessor 10 and the biometric sensor 20 are used as examples as follows. In one embodiment as shown in Fig. 10, the microprocessor 10 and the biometric sensor 20 are arranged side by side on a substrate 100. An encapsulant 101 covers the microprocessor 10 and the biometric sensor 20. A protection layer 102 is attached to a top surface of the encapsulant 101. In another embodiment as shown in Fig. 11, the microprocessor 10 and the biometric sensor 20 are stacked. The microprocessor 10 is disposed on the substrate 100. The biometric sensor 20 is stacked on the microprocessor 10. A die attach film (DAF) 103, which is used as an insulator, is formed between the biometric sensor 20 and the microprocessor 10 to separate the biometric sensor 20 and the microprocessor 10. The encapsulant 101 covers the microprocessor 10 and the biometric sensor 20. The protection layer 102 is attached to a top surface of the encapsulant 101.

The power sources described as follows are only for examples, but are not limited thereto. In one embodiment as shown in Fig. 4, the power source 60A comprises different types, including a contact power supply 61A and a contactless inductive power supply 62A. In another embodiment as shown in Fig. 6, the power source 60B comprises different types, including a contact power supply 61B, a contactless inductive power supply 62B and a battery power supply 63B. The contact power supply 61A, 61B and the battery power supply 63B provides electric power to the power management unit 41A. The contactless inductive power supply 62B provides electric power to the power management unit 41A or the security element 42A. In one embodiment, the contact power supply 61A, 61B and the battery power supply 63B may also provide electric power to the security element 42A.

The electric power of the contact power supply 61A, 61B means the electric power is provided by electrically contacting physical contacts on the smart card to the physical contacts in the card reader when the smart card is inserted into the card reader. The electric power of the contactless inductive power supply 62A, 62B means the electric power is provided by the induction current via inductive coupling or electric field coupling when the smart card approaches the card reader. The electric power of the battery power supply 63B is generated by the battery built-in the smart card. Generally, the contact power supply 61A, 61B provides an average current of about 7.4mA, and the voltage value is about 5V. The contactless inductive power supply 62A, 62B provides an average current of about 4.2mA, and the voltage value is about 2 to 12V. The battery power supply 63B provides an average current of about 6.5mA, and the voltage value is about 3.7 to 4.2V. Thus, as to the current, the contact power supply 61A, 61B provides the maximum current, followed by the battery power supply 63B and the smallest current is provided by the contactless inductive power supply 62A, 62B. Therefore, the current magnitude may be used to determine the type of the power source. Since the contact power supply 61A, 61B provides a larger current, the microprocessor 10 is allowed to operate at a higher operating frequency. Since the contactless inductive power supply 62A, 62B provides a smaller current, the microprocessor 10 is allowed to operate at a lower operating frequency. Since the battery power supply 63B provides a medium current between the aforementioned currents, the microprocessor 10 is allowed to operate at a medium operating frequency between the aforementioned frequencies.

On the other hands, as to the voltage, the voltages provided by the contact power supply 61A, 61B and the battery power supply 63B are relatively stable, while the voltage provided by the contactless inductive power supply 62A, 62B fluctuates due to a slight change in distance between the smart card and the card reader. Taking the power supply period of 20ms (milliseconds) as an example, the voltages provided by the contact power supply 61A, 61B and the battery power supply 63B could raise to the target voltage value in a very short time, and are stably controlled around the target voltage value. However, the target voltage value of the battery power supply 63B is smaller than the target voltage value of the contact power supply 61A, 61 B. Further, the voltage value of the contactless inductive power supply 62A, 62B may fluctuate due to a change in distance between the smart card and the card reader, and a slight change in distance causes a voltage change. Therefore, the type of the power source can be determined by the slope of the voltage value climb, the variation of the voltage value and the target voltage value.

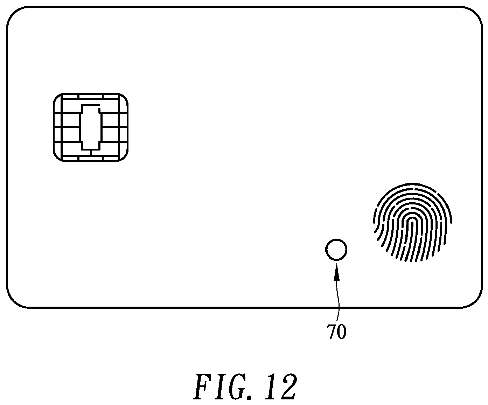

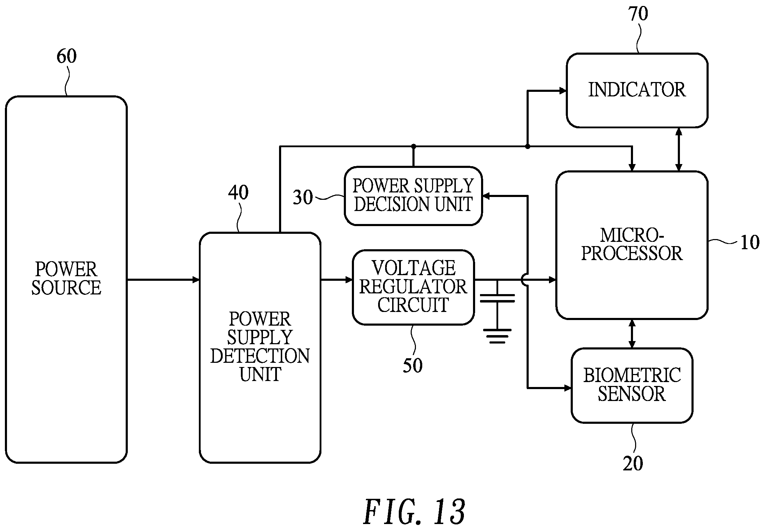

With reference to Figs. 12 and 13, the smart card as described may further comprise an indicator 70. The indicator 70 electrically connects to the microprocessor 10 and is disposed on the top surface of the smart card. The indicator unit 70 can be observed from an appearance of the smart card to indicate the current operating frequency. In one embodiment, the indicator 70 is an indicating light, which expresses the current operating frequency of the microprocessor 10 by means of brightness, color or flashing frequency. For example, the highest brightness indicates the highest operating frequency, the medium brightness indicates the intermediate operating frequency, and the low brightness indicates the lowest operating frequency. Otherwise, red indicates the highest operating frequency, yellow indicates the intermediate operating frequency, and green indicates the lowest operating frequency. Otherwise, the highest flashing frequency indicates the highest operating frequency, the medium flashing frequency indicates the intermediate operating frequency, and the low flashing frequency indicates the lowest operating frequency.

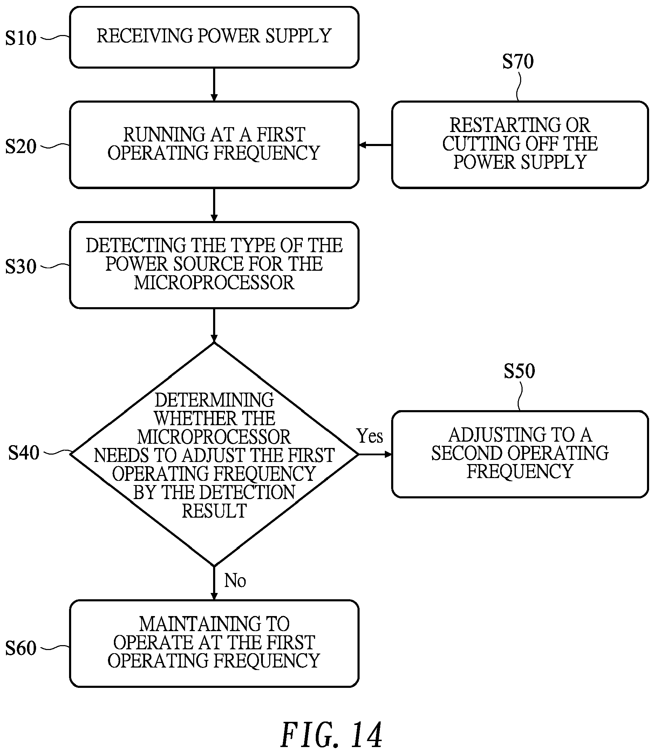

With reference to Fig. 14 in view of Fig. 4, a control method of a smart card in accordance with the present invention comprises steps as follows.

Receiving power supply (S10): When the smart card and the power source 60A connects or approaches to each other, the power source 60A provides current to the smart card to enable the smart card to operate.

Running at a first operating frequency (S20): When the smart card receives the current, the microprocessor 10 operates at the first operating frequency. Since the smart card just starts to operate, the type of the power source 60A is still unknown. Thus, the microprocessor 10 operates at the first operating frequency, which is lower frequency, to maintain the operation of the microprocessor 10 at the first operating frequency no matter which the type of the power source 60A is.

Detecting the type of the power source 60A for the microprocessor 10 (S30): Since the current provided by the power source 60A passes through the power supply decision unit 30 and the power supply detection unit 40A, the power supply detection unit 40A and the power supply decision unit 30 detect the type of the power source 60A. In one embodiment, to detect the type of the power source 60A means that to detect the current generated by which type of the power source 60A. The type of the power source 60A could be determined through detecting the power-supply path, the current value, the voltage value or the variation of the voltage value.

Determining whether the microprocessor 10 needs to adjust the first operating frequency by the detection result in the step S30 (S40): The microprocessor 10 determines whether the microprocessor adjusts the operating frequency based on the determination of the power supply decision unit 30. If the determination of the power supply decision unit 30 determines that the power source 60A provides a larger current, the microprocessor 10 replaces the first operating frequency with a second operating frequency, which is higher than the first operating frequency (S50). If the determination of the power supply decision unit 30 determines that the power source 60A provides a smaller current, the microprocessor 10 maintains to operate at the first operating frequency.

Furthermore, when the smart card is abnormally used and the microprocessor 10 is restarted or the power source 60A is cut off (S70), the step S20 is executed so that the microprocessor 10 operates at the first operating frequency again no matter which operating frequency is used before. Thus, the microprocessor 10 is ensured to operate smoothly as the initial state, and then executes the following steps.

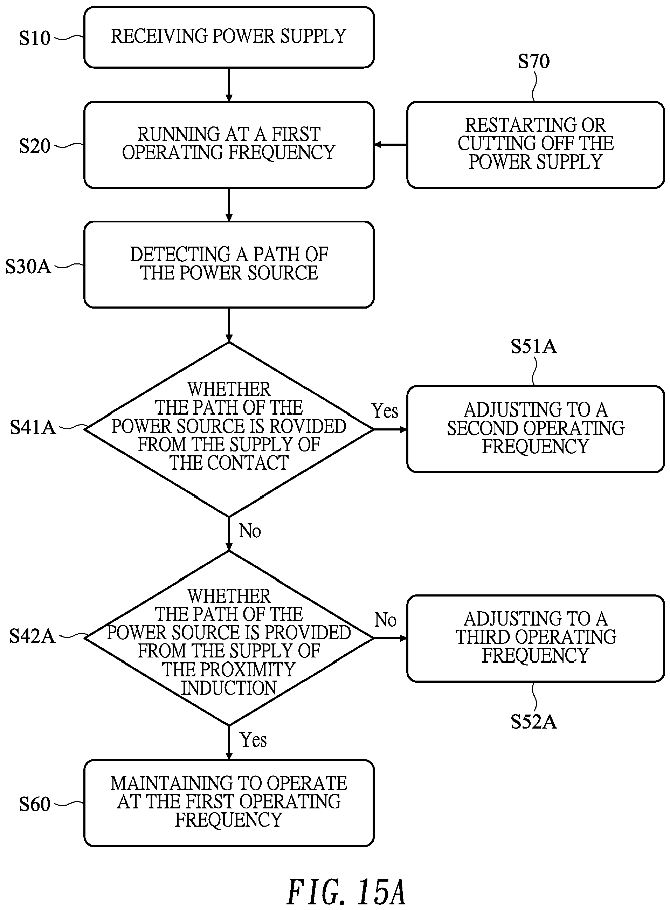

With reference to Fig. 15A in view of Fig. 6, in one embodiment of the control method shows the example of detecting a power-supply path and the contactless inductive power supply 62B provides the current through the security element 42A. Besides the steps S10, S20 and S70 as described, the control method in this embodiment executes following steps after the step S20.

Detecting a power-supply path to the microprocessor 10 (S30A): Since the current provided by the power source 60B passes through the power supply detection unit 40A, the power supply detection unit 40A detects the power-supply path of the power source 60B.

Determining whether the power-supply path is provided from the contact power supply 61B (S41A): Since when the current is obtained with the physical contact, the power management unit 41A learns which the type of the power source 60B is through a first contact that supplies current. Thus, the power management unit 41A could therefore determine whether the type of the power source 60B is the contact power supply 61B. If so, the operating frequency is adjusted to the second operating frequency (S51A), which is higher. If no, the step S42A is executed.

Determining whether the power-supply path is provided from the contactless inductive power supply 62B (S42A): According to the Fig. 6, only the current provided from the contactless inductive power supply 62B passes through the security element 42A, so that determining whether the current comes from the security element 42A determines whether the type of the power source 60B is the contactless inductive power supply 62B. If so, the microprocessor 10 maintains to operate at the first operating frequency (S60), which is lower. If not, the type of the power source 60B is either the contact power supply 61B or the contactless inductive power supply 62B and the type of the power source 60B must only be the battery power supply 63B. Then the operating frequency is adjusted to a third operating frequency (S52A), which is between the first and the second operating frequencies. The power management unit 41A may connect to the security element 42A through the switching element and the first contact, and detects whether the first contact or the security element 42A has a current through polling, thereby making a determination.

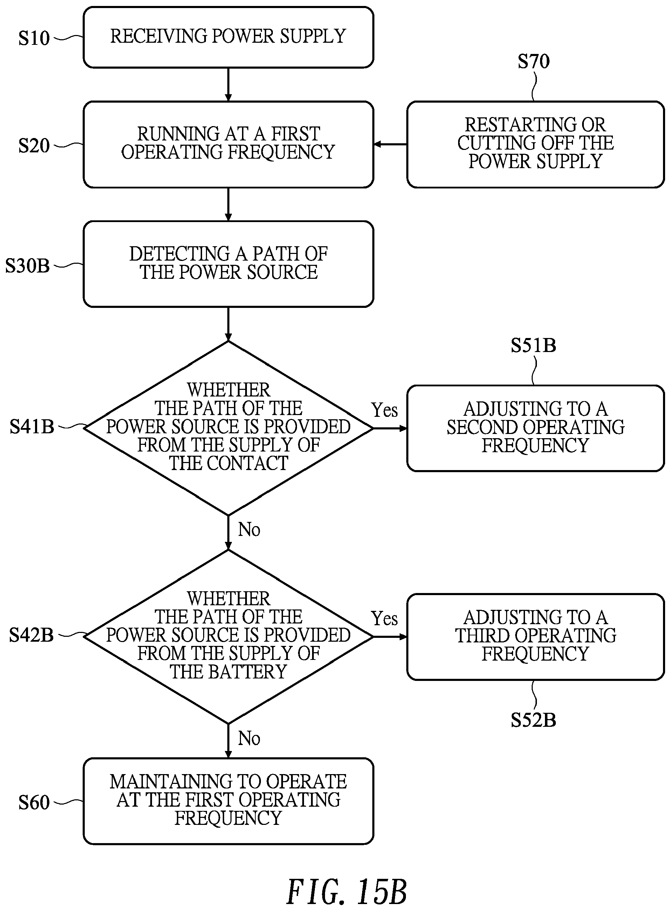

With reference to Fig. 15B in view of Fig. 6, in one embodiment of the control method shows the example of detecting a power-supply path and the contactless inductive power supply 62B provides the current through the power management unit 41A. Besides the steps S10, S20 and S70 as described, the control method in this embodiment executes following steps after the step S20.

Detecting a power-supply path to the microprocessor 10 (S30B): Since the current provided by the power source 60B passes through the power supply detection unit 40A, the power supply detection unit 40A detects the power-supply path of the power source 60B.

Determining whether the power-supply path is provided from the contact power supply 61B (S41B): Since when the current is obtained with the physical contact, the power management unit 41A learns which the type of the power source is through a first contact that supplies current. Thus, the power management unit 41A could therefore determine whether the type of the power source is the contact power supply 61B. If so, the operating frequency is adjusted to the second operating frequency (S51B), which is higher. If no, the step S42B is executed.

Determining whether the power-supply path is provided from the battery power supply 63B (S42B): Since when the current is obtained with the physical contact, the power management unit 41A learns which the power source is through a second contact that supplies current. Thus, the power management unit 41A could therefore determine whether the type of the power source 60B is the battery power supply 63B. If so, the operating frequency is adjusted to the third operating frequency (S52A), which is between the first and the second operating frequencies. If not, the microprocessor 10 maintains to operate at the first operating frequency (S60). The power management unit 41A may connect to the first and second contacts through the switching element, and detects whether the first contact or the second contact has a current through polling, thereby making a determination.

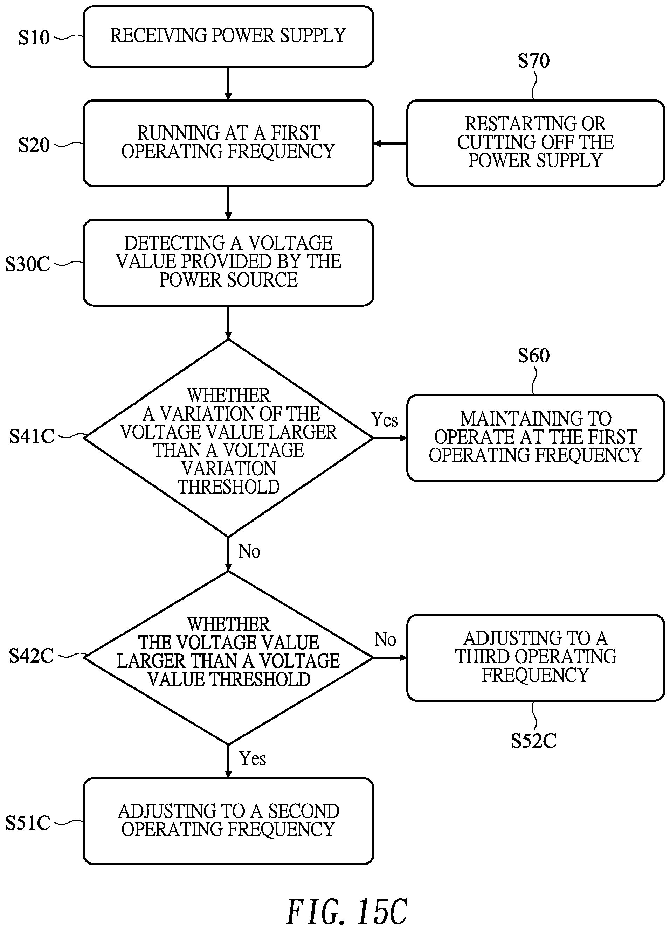

With reference to Fig. 15C in view of Fig. 6, in one embodiment of the control method shows the example of detecting a voltage from the power source 60B. Besides the steps S10, S20 and S70 as described, the control method in this embodiment executes following steps after the step S20.

Detecting a voltage provided to the microprocessor 10 (S30C): Since the variations of the voltage values and the target voltages of different types of the power source 60B are different, detecting the variation of the voltage value and the voltage value provided to the microprocessor 10 learns which the type of the power source 60B is.

Determining whether the variation of the voltage value from the power source 60B is larger than a variation threshold in a predetermined time (S41C). If so, the microprocessor 10 maintains to operate at the first operating frequency (S60). If not, the step S42C is executed. Since the contact power supply 61B and the battery power supply 63B provides electric power through the physical contacts, the voltages provided by the contact power supply 61B and the battery power supply 63B raise quickly to and maintain around the target voltage in the predetermined time, such as 20ms. However, the variation of the voltage value provided through the contactless inductive power supply 62B has greater change due to the change of the distance between the smart card and the card reader. Thus, if the variation of the voltage value from the power source 60B is larger than the variation threshold in the predetermined time, the type of the power source 60B is determined as the contactless inductive power supply 62B so that the first operating frequency is maintained, which is lower.

Determining whether the voltage value from the power source 60B is larger than a voltage threshold (42C): If so, the operating frequency of the microprocessor 10B is adjusted to the second operating frequency (S51C), which is higher, since the voltage value from the power source 60B is larger than the voltage threshold means that the type of the power source 60B such as the contact power supply 61B provides a larger voltage when the variation of the voltage value is stable following by the determination of the step S41C. If not, the operating frequency of the microprocessor 10B is adjusted to the third operating frequency (S52C), which is between the first and second operating frequency, since the voltage value from the power source 60B is smaller than the voltage threshold means that the type of the power source 60B such as the battery power supply 63B provides a smaller voltage when the variation of the voltage value is stable following by the determination of the step S41C. With further reference to Fig. 3, the first reference value REF1 stored in the first comparator 31 and the second reference value REF2 stored in the second comparator 32 may respectively the variation threshold and the voltage threshold. In another embodiment, the steps S41C or S42C may be skipped when only two types of the power source are, i.e. only determining through the variation of the voltage value or through the voltage value.

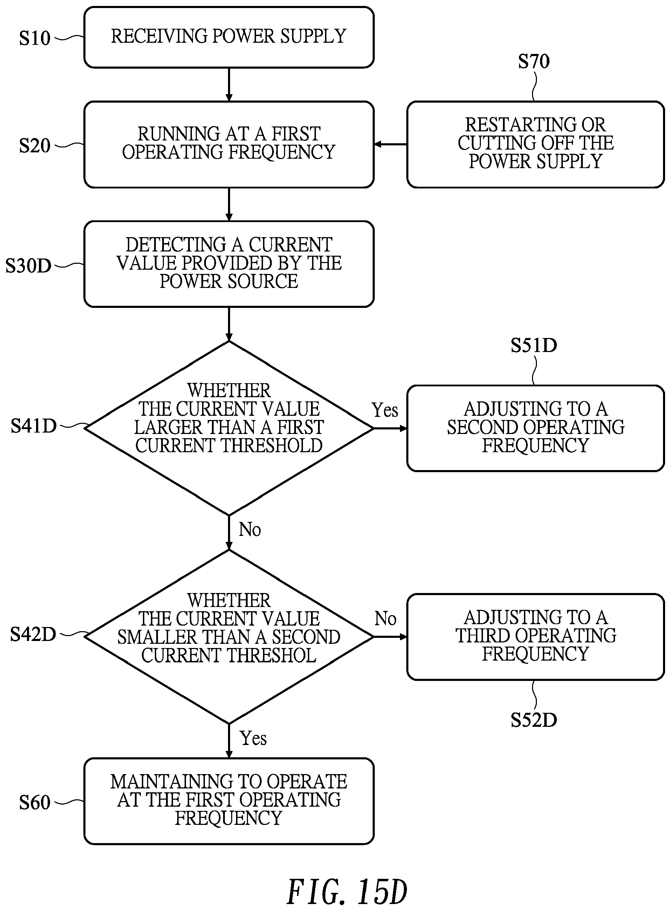

With reference to Fig. 15D in view of Fig. 6, in one embodiment of the control method shows the example of detecting a current from the power source 60B. Besides the steps S10, S20 and S70 as described, the control method in this embodiment executes following steps after the step S20.

Detecting a current provided to the microprocessor 10 (S30D): Since the current of different types of the power source 60B are different, detecting the current provided to the microprocessor 10 learns which the type of the power source 60B is.

Determining whether the current value from the power source 60B is larger than a first current threshold (41 D): If so, the operating frequency of the microprocessor 10B is adjusted to the second operating frequency (S51D), which is higher. If not, the step S42D is executed.

Determining whether the current value from the power source 60B is smaller than a second current threshold (42D): If so, the operating frequency of the microprocessor 10B maintains to operate at the first operating frequency, which is lower (S60). If not, the current value from the power source 60B is between the first and second current thresholds. Thus, the operating frequency of the microprocessor 10B is adjusted to the third operating frequency (S52D), which is between the first and second operating frequency. With further reference to Fig. 3, the first reference value REF1 stored in the first comparator 31 and the second reference value REF2 stored in the second comparator 32 may respectively be the first and second current thresholds. In another embodiment, the steps S42D may be skipped when only two types of the power source are, i.e. only determining through one current threshold.

In conclusion, the smart card as described adjusts the appropriate operating frequency according to the different types of the power source by detecting the type of the power source. Therefore, the smart card as described uses a higher operating frequency under the appropriate type of the power source to speed up the processing speed and enhance the user experience.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A smart card **characterized in that** the smart card comprises:
a microprocessor;
a biometric sensor electrically connecting to the microprocessor;
a power supply decision unit electrically connecting to the microprocessor; and
a power supply detection unit electrically connecting to the power supply decision unit, wherein
when the microprocessor operates at a first operating frequency, the power supply detection unit detects a type of a power source providing electric power to the microprocessor, the power supply detection unit transmits a detection result to the power supply decision unit, wherein the microprocessor determines whether to change the first operating frequency through the detection result.

2. The smart card as claimed in claim 1, wherein
the power decision unit and the microprocessor are integrated into a circuit architecture; or
the power decision unit serially connects between the microprocessor and the power supply detection unit.

3. The smart card as claimed in claim 1, wherein the detecting of the type of the power source includes to detect a power-supply path, a voltage from the power source or a current from the power source.

4. The smart card as claimed in claim 1, wherein the power supply detection unit comprises a power management unit and a security element for storing confidential information of the smart card.

5. The smart card as claimed in claim 4, wherein
the security element and the power management unit are integrated into a circuit architecture; or
the security element and the microprocessor are integrated into a circuit architecture.

6. The smart card as claimed in claim 1, wherein the microprocessor and the biometric sensor are integrated into a circuit architecture.

7. The smart card as claimed in claim 4, wherein the microprocessor, the security element and the biometric sensor are integrated into a circuit architecture.

8. The smart card as claimed in claim 1, wherein the microprocessor and the biometric sensor are arranged side by side on a substrate.

9. The smart card as claimed in claim 1, wherein the microprocessor and the biometric sensor are stacked on a substrate, and an insulator is formed between the biometric sensor and the microprocessor.

10. A control method of a smart card, which comprises a microprocessor and a biometric sensor, **characterized in that** the control method comprises steps of:
a. running the microprocessor at a first operating frequency;
b. determining a type of a power source provided to the microprocessor; and
c. determining whether the microprocessor changes the first operating frequency based on the determination in the step b.

11. The control method as claimed in claim 10, wherein the step b comprises determining which type of a power source provides the electric power to the microprocessor is through detecting a power-supply path of the power source.

12. The control method as claimed in claim 11, wherein
in the step b, the type of the power source is determined as a first source when an electric power of the power source is provided through a first contact;
in the step b, the type of the power source is determined as a second source when the electric power is provided through a security element; and
a current provided by the first source is larger than a current provided by the second source.

13. The control method as claimed in claim 12, wherein
in the step b, the type of the power source is determined as a third source when the electric power is neither detected through the first contact nor through the security element; and
a current provided by the third source is between the currents provided by the first and second sources.

14. The control method as claimed in claim 11, wherein
in the step b, the type of the power source is determined as a first source when an electric power of the power source is provided through a first contact;
in the step b, the type of the power source is determined as a third source when the electric power is provided through a second contact;
in the step b, the type of the power source is determined as a second source when the electric power is neither detected through the first contact nor through the second contact;
a current provided by the first source is larger than a current provided by the second source; and
a current provided by the third source is between the currents provided by the first and second sources.

15. The control method as claimed in claim 12, wherein
in the step c, the first operating frequency of the microprocessor is adjusted to a second operating frequency when the type of the power source is determined as the first source in the step b;
in the step c, the first operating frequency of the microprocessor is maintained when the type of the power source is determined as the second source in the step b; and
the second operating frequency is higher than the first operating frequency.

16. The control method as claimed in claim 13, wherein
in the step c, the microprocessor is adjusted to a third operating frequency when the type of the power source is determined as the third source in the step b; and
the third operating frequency is between the first and second operating frequencies.

17. The control method as claimed in claim 10, wherein in the step b, the type of a power source is determined through determining a voltage value provided by the power source.

18. The control method as claimed in claim 17, wherein
in the step c, the first operating frequency of the microprocessor is maintained when a variation of the voltage value determined in the step b is larger than a variation threshold in a predetermined time; and
in the step c, the microprocessor is adjusted to a fourth operating frequency when the variation of the voltage value determined in the step b is smaller than the variation threshold in the predetermined time and the voltage value determined in the step b is larger than a voltage threshold;
wherein the fourth operating frequency is higher than the first operating frequency.

19. The control method as claimed in claim 18, wherein
in the step c, the microprocessor is adjusted to a fifth operating frequency when the variation of the voltage value determined in the step b is smaller than the variation threshold in the predetermined time and the voltage value in the step b is smaller than the voltage threshold; and
wherein the fifth operating frequency is between the first and fourth operating frequencies.

20. The control method as claimed in claim 10, wherein in the step b, determining a current value provided by the power source determines the type of a power source provided to the microprocessor.

21. The control method as claimed in claim 20, wherein
in the step c, the microprocessor is adjusted to a sixth operating frequency when the current value determined in the step b is larger than a first current threshold;
in the step c, the first operating frequency of the microprocessor is maintained when the current value determined in the step b is smaller than a second current value;
the first current threshold is larger than or equal to the second current threshold; and
the sixth operating frequency is higher than the first operating frequency.

22. The control method as claimed in claim 21, wherein
in the step c, the microprocessor is adjusted to a seventh operating frequency when current value determined in the step b is between the first and second current thresholds; and
the seventh operating frequency is between the first and sixth operating frequencies.
